**Europäisches Patentamt**

(19) **European Patent Office**

**Office européen des brevets**

(11) Publication number: **0 090 762**
**B1**

(12) # EUROPEAN PATENT SPECIFICATION

(45) Date of publication of the patent specification: **27.08.86**

(51) Int. Cl.⁴: **B 23 K 20/00,** B 23 K 20/14

(21) Application number: **83710011.4**

(22) Date of filing: **22.03.83**

(54) Method of welding by hot isostatic pressing.

(30) Priority: **29.03.82 SE 8201982**

(43) Date of publication of application:
**05.10.83 Bulletin 83/40**

(45) Publication of the grant of the patent:
**27.08.86 Bulletin 86/35**

(84) Designated Contracting States:
**CH DE FR GB IT LI**

(56) References cited:
**DE - A - 2 242 961**
**GB - A - 2 042 393**
**SE - B - 396 371**

**DMIC REPORT 159, DEFENSE METALS INFORMATION
CENTER; BATELLE MEMORIAL INSTITUTE, Columbus,
S.J. PAPROCHI et al., "Gas-pressure bonding"**

(73) Proprietor: **ASEA AB, S-721 83 Västeras (SE)**

(72) Inventor: **Ekbom, Ragnar, Bergsing., Svedjevägen 8,
S-612 00 Finspang (SE)**
Inventor: **Garvare, Tore, Dipl.Ing., Ragvägen 39,
S-954 00 Gammelstad (SE)**

(74) Representative: **Boecker, Joachim, Dr.-Ing.,
Rathenauplatz 2-8, D-6000 Frankfurt a.M. 1 (DE)**

**Description**

The invention relates to a method of welding by hot isostatic pressing for joining parts of a solid material into a composite machine element.

It has long been known that a very good bond can be obtained between two solid metal parts by pressing the parts against each other at such a high temperature that bonding is optained by diffusion of materials at the contact surfaces. Using hot isostatic pressing (HIP) to obtain this bond is known from DMIC Report 159, September 25, 1961 entitled «Gas Pressure Bonding» by S.J.Paprochi, E.S.Hodge and P.I.Gripshover published by the Defence Metals Information Center, Batelle Memorial Institute. This publication gives examples of the joining of parts of materials which either cannot at all, or can only at very high costs, be joined together by conventional welding methods. Gastight sheet metal casings have been necessary to bring about spaces between different parts of the end product. The methods described have not been particularly well adapted for industrial manufacture of complicated components.

From the GB-A 2 042 393 a method is known that deals with the surface protection of a superalloy substrate of complex shape by means of applying protecting sheet material through high isostatic pressing. To protect the surface of the substrate in a corrosive environment, the substrate is provided with a duplex sheet cladding by diffusion bonding. This is achieved by pre-assembling an inner sheet cladding of aluminium to the substrate and than assembling in outer corrosion resistant sheet material which completely envelops and seals the inner sheet cladding. Than the entire assembly is placed into a deformable container in which it is immersed completely in a glass pressured-transmitting medium. The container is than sealed and subjected to high temperature isostatic pressing thus achieving diffusion bonding between the cladding and the substrate. The glass material employed in this method served only as a pressure transmitting medium in its molten state. To pressurized gas from penetrating into the interface between the components to be bonded an additional deformable gas-tight container is necessary.

The invention aims at developing a method of the abovementioned kind suitable for industrial application.

This aim is achieved by a method according to the preamble of Claim 1 which is characterized by the features of the characterizing portion of Claim 1.

Particular embodiments of the invention are characterized by the features stated in the subsequent claims.

The method according to the invention can be employed, for example, for the manufacture of guide vane rings by welding blades into rings, for the manufacture of turbine wheels by welding blades into discs, for the assembly of valve housings of several basic components, for the attachement of elements of fibre material to each other or to a purely metallic material, or for wear rings of stellite in valve seats, etc.

For carrying out the invention, the parts are formed so that surfaces which are to be joined together are completely or partly in contact with each other. Recesses in rings or discs for guide vanes or rotor blades are suitably given such a size that an interference fit is obtained. Prior to insertion, the blades are then cooled to such a low temperature that there is a clearance during the insertion. The interference fit, with the desired contact pressure on the surrounding surfaces, is obtained after heating the blades to the temperature of the rings or the disc. The blades can be cooled by liquid nitrogen. Across the joint between the parts there is applied a slurry or a paste, consisting of a solvent or softener, capable of being driven off, and a fine-grained metallic powder which may have the same composition as the alloy in one of the parts which are to be joined together. If the parts have a different composition, it is also possible to use a powder mixture consisting of two different powders, each of which having the same composition as the alloy in one of the components to be joined together. The joint is covered by a porous glass layer, which at a certain temperature turns into a gas-impermeable layer, whereafter the composite body is subjected to an allsided gas pressure at a temperature which is so high, that diffusion bonding is obtained at the boundary layer between the parts. The parts can be completely surrounded by the glass powder layer. The porous glass layer may also be applied suspended in a fluid, for example water or alcohol, or mixed with a softener. Nearest to the metal powder layer there may be applied a layer of a glass having a high melting point and outside this layer a layer of a glass having a lower melting point. During heating, the outer layer first forms a tight, gas-impermeable layer. When the glass of this layer begins to melt and tends to run off the body, the glass powder with the higher melting point forms a gas-impermeable layer preventing pressure gas from penetrating into the joint. The metal powder layer nearest the joint prevents glass from penetrating in between the surfaces which are to be joined together, which would have made the intended bonding impossible. The application of glass layers and isostatic pressing of powder bodies are described in SE-B 396 371 and 414 921.

Impurities may deteriorate the bonding or make it impossible. It is therefore important that the surfaces to be joined are clean. If the parts are correctly formed and prepared, the joint will be as strong as the material in the parts. The deteriorations of the material in and around the joint which occurs in traditional welding, such as grain growth, segregations and formation of pores, is avoided with HIP welding. Different metals, which cannot otherwise be welded together, can be joined. The surfaces to be joined are cleaned before being joined. For certain metals, defatting of the surfaces is sufficient. For other metals a careful cleaning is required, for example washing with acid or reduction in nitrogen gas at elevated temperature, in order to remove efficiently surface coatings, for example oxides. Reduction by means of nitrogen gas can also be carried out on composite components, the joints of which have been prepared, in pressure furnaces at a temperature below the melting temperature of the glass powder. If the metal layer nearest the joint consists of a powder having smaller grain size than 45 μm, the penetration by the glass into this layer will be of the order of magnitude of one or a few tenths of a millimetre. Normally, this penetration does not deteriorate the strength of the composite material to any mentionable extent. To facilitate the removal of the glass layer, a powder layer of a difficultly fusible material, such as olivine, a magnesium aluminium silicate having a melting point of 1700°C to 1800°C, quartz, or other materials, may be applied on top of the metal powder layer. Olivine is an exceedingly suitable material since it has the same coefficient of expansion as steel and other materials of interest, for example superalloys for which the described method can be employed. The similar expansion upon heating implies that no cracks occur in the layer upon heating. Some of the powder layers may contain a getter material which, during the heating, absorbs impurities which may be detrimental for the strength of the joint. Another way of facilitating the removal of the glass layer after the pressing is to coat the metal powder layer and other surfaces with a layer of boron nitride which prevents the glass from adhering to the metal surfaces.

Since the demands for cleanness of the surfaces to be joined together are great in order to be able to obtain good bonding, it is a requirement that the used suspension agent, solvent or softener shall be capable of being driven off completely. They must not leave any coatings on the surfaces. Alcohols may be used.

The parameters pressure, temperature and time are dependent on the material. The prepared machine element is first degassed at room temperature in a vacuum between 1 and 0.01 mbar for about 0.5 hours. The degassing can be carried out in the pressure furnace. If deoxidation is required, the furnace can be filled with nitrogen gas to atmospheric pressure after the degassing, and the temperature can be increased to a level suitable for the deoxidation. The pressure rises to a level dependent on the temperature and is maintained for one to two hours. For copper alloys, a temperature of about 300°C may be suitable, for iron-based alloys a temperature of about 800°C. The temperature is increased to a level at which a dense glass layer is formed, wherafter pressure gas, for example nitrogen, argon or helium, is inserted and the temperature is increased to the level required for diffusion bonding. The pressure and the temperature are maintained for to several hours to obtain a satisfactory bonding. After a completed cycle, the furnace is allowed to cool to a suitable decharging temperature, the charge is then removed and the finished machine element is cleaned, for example by blasting.

If deoxidation by nitrogen gas is not required, the prepared body is suitably degassed at 400°C or at an even higher temperature under high vacuum. A suitable pressure may be ≈ 1,3 Pa (10⁻² torr).

A very important advantage of the method of joining according to the invention is that it can be carried out at a temperature considerably below the melting point of the material. This means that the joining together can be performed at a temperature where the grain growth is small and other unfavourable changes proceed slowly. The joining can be carried out completely without any supply of additional materials and without the application of gases or other substances which may affect the material.

The invention will now be described in greater detail with reference to the accompanying drawings, in which:

Fig. 1 shows an embodiment of an arrangement for carrying out the method according to the invention in which the prepared composite machine element is surrounded by a glass powder in a crucible,

Fig. 2 shows an ebodiment in which only the joint is covered with a number of powder layers prior to the treatment in the pressure furnace.

The figures show a machine element 1 which is composed of two parts 2 and 3. The part 2 in inserted into a recess in the part 3.

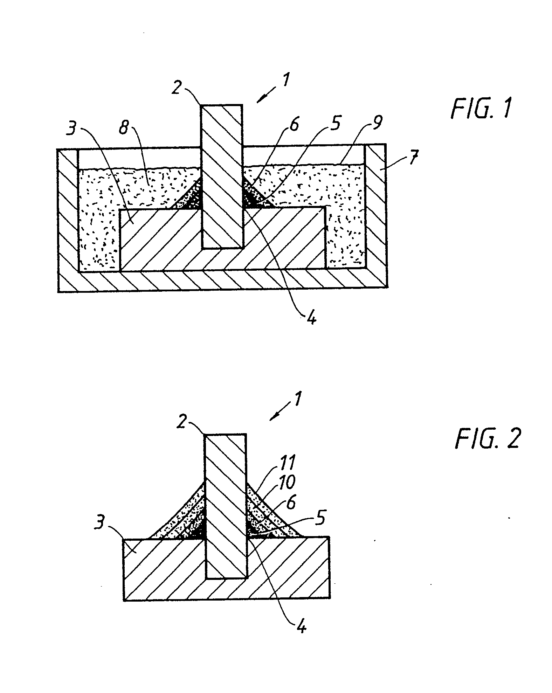

In the embodiment according to Figure 1, the joint 4 is covered by a first powder layer 5 consisting of metal powder with a composition similar to that of the material in part 1 and/or part 2. On top of this powder layer 5, there is placed a powder layer 6 of olivine. The part 1 is placed in a crucible 7 filled with a glass powder 8, the upper level of which lies above the layer 5 and 6 which cover the joint 4. During degassing and deoxidation in nitrogen gas, the glass powder can be penetrated by gas. Because of the increase in temperature prior to pressing, the glass powder forms a gas-impermeable layer which prevents the penetration of pressure gas to the joint during the subsequent pressing.

In the embodiment according to Figure 2, the powder layers 5 and 6, which consist of a metal powder and an olivine powder, respectively, are covered by a first powder layer 10 of a glass having a high melting point and by a second powder layer 11 of a glass having a lower melting point. During heating after degassing, the glass powder layer 11 first melts and forms a gas-impermeable layer. When the temperature is further increased and the glass in the layer 11 starts melting and runs away, the powder in the layer 10 has molten and forms a gas-impermeable layer which prevents the penetration of gas during pressing.

**Example**

Two parts 2 and 3 of a Cr–M0–V steel, containing 0,15% C, 0.4% Mn, 11.8% Cr, 0.6% Mo, 0.3% V and the remainder Fe, have been joined in the manner shown in Figure 1. The part 2 was turned conically, and in the part 3 a conical opening was turned. Prior to assembling the parts were defatted. The joint 4 was covered by a metal powder layer 5 of a powder having a grain size $< 44\,\mu m$. The thickness of the layer was 2 mm. The machine element formed by the parts 2 and 3 was placed in a crucible 7 which was filled with a glass powder having a low melting point and having the following composition in percentage by weight: 80.3% $SiO_2$, 12.2% $B_2O_3$, 2.8% $A1_2O_3$, 4.0% $Na_2O$, 0.4% $K_2O$ and 0.3% CaO. Degassing was carried out at a temperature of 400°C and a pressure of 1,3 Pa ($10^{-2}$ torr) for 1 hour. The crucible with ists contents was placed in a pressure furnace. The furnace was evacuated twice to a pressure of 1 torr and was flushed after each evacuation with pure nitrogen gas having a pressure of 1 bar. The temperature was raised to 1150°C, whereby the glass powder melted and formed a gas-impermeable layer. Then the pressure was raised to 120 MPa by admitting argon gas. The pressure was maintained at 120 MPa and the temperature at 1150°C for two hours. A perfect joint was obtained.

**Claims**

1. Method of welding by hot isostatic pressing for joining parts (2, 3) of a solid material into a composite machine element (1), said parts being formed so that by assembling them their surfaces to be joined together come completely or partially into contact with each other, characterized in that after joining the parts (2, 3) there is applied over the joint (4) a first layer (5) of powder having substantially the same composition as the material in one of the parts or a powder mixture in which each of the different powders has substantially the same composition as the material in one of the parts (2, 3) to be joined, that over the first powder layer (5) a second layer (8, 10) of a glass powder is applied, that thereafter the composite component is heated in a conventional manner to such a temperature that the glass powder turns into a gas-impermeable layer, and that thereafter the parts (2, 3) are subjected to an all-sided gas pressure at such a high temperature that diffusion bonding is obtained at the contact surface between the parts (2, 3).

2. Method according to claim 1, characterized in that solid metal parts (2, 3) are joined together.

3. Method according to claim 1 or 2, characterized in that over the first powder layer (5) two glass powder layers (10, 11) are applied, whereby the glass material in the outer glass powder layer (11) has a lower melting point than the glass material in the underlying glass powder layer (10).

4. Method according to claim 1 or 2, characterized in that between the first powder layer (5) and the second powder layer (10) there is applied a third powder layer (6) of a material, for example olivine, with a melting point above the pressing temperature.

5. Method according to any of the preceding claims, characterized in that the powder layers (5, 6, 10, 11) are applied in the form of a slurry or a paste consisting of a solvent or a softener capable of being driven off.

6. Method according to any of claim 1, 2 or 4, characterized in that the parts (2, 3) with the applied metal powder layer (5) and the possibly applied second powder layer (6) over the joint (4) is placed in a crucible (7), and that glass powder (8), forming the second or third layer, respectively, is filled into the crucible so that the joint and the underlying layers are covered.

**Patentansprüche**

1. Verfahren zum Schweissen durch isostatisches Pressen zur Verbindung von Teilen (2, 3) aus massivem Material zu einem zusammengesetzten Maschinenelement (1), wobei die Teile so geformt sind, dass bei ihrer Zusammenfügung ihre miteinander zu verbindenden Oberflächen vollständig oder teilweise in Kontakt miteinander kommen, dadurch gekennzeichnet, dass nach dem Zusammenfügen der Teile (2, 3) über der Verbindung (4) eine erste Schicht (5) aufgebracht wird, die aus einem Pulver besteht, welches im wesentlichen die gleiche Zusammensetzung wie das Material eines der Teile hat, oder aus einer Pulvermischung besteht, in welcher jedes der verschiedenen Pulver im wesentlichen die gleiche Zusammensetzung wie das Material in einem der zu verbindenden Teile (2, 3) hat, dass über der ersten Pulverschicht (5) eine zweite Schicht (8, 10) aus Glaspulver aufgebracht wird, dass danach das zusammengesetzte Bauteil in konventioneller Weise auf eine solche Temperatur erhitzt wird, dass das Glaspulver in eine gasundurchlässige Schicht übergeht und dass danach die Teile (2, 3) einem allseitig wirkenden Gasdruck bei einer solchen Temperatur ausgesetzt werden, dass eine Diffusionsbindung an den Berührungsflächen zwischen den Teilen (2, 3) erreicht wird.

2. Verfahren nach Anspruch 1, dadurch gekennzeichnet, dass massive Metallteile (2, 3) miteinander verbunden werden.

3. Verfahren nach Anspruch 1 oder 2, dadurch gekennzeichnet, dass über der ersten Pulverschicht (5) zwei Glaspulverschichten (10, 11) aufgebracht werden, wobei das Glasmaterial der äusseren Glaspulverschicht (11) einen niedrigeren Schmelzpunkt als das Glasmaterial der darunterliegenden Glaspulverschicht (10) hat.

4. Verfahren nach Anspruch 1 oder 2, dadurch gekennzeichnet, dass zwischen der ersten Pulverschicht (5) und der zweiten Pulverschicht (10) eine dritte Pulverschicht (6) aus einem Material aufgebracht wird, zum Beispiel Olivin, dessen Schmelzpunkt über der Presstemperatur liegt.

5. Verfahren nach einem der vorhergehenden Ansprüche, dadurch gekennzeichnet, dass die Pulverschichten (5, 6, 10, 11) in Form einer Aufschlemmung oder einer Paste aufgebracht werden, die aus einem austreibbaren Lösungsmittel oder Weichmacher besteht.

6. Verfahren nach einem der Ansprüche 1, 2 oder 4, dadurch gekennzeichnet, dass die Teile (2, 3) mit der aufgebrachten Metallpulverschicht (5) und der eventuell aufgebrachten zweiten Pulverschicht (6) über der Verbindung (4) in einen Tiegel (7) eingelegt wird und dass Glaspulver (8), welches die zweite beziehungsweise dritte Schicht bildet, derart in den Tiegel eingefüllt wird, dass die Verbindung und die darunterliegenden Schichten bedeckt sind.

**Revendications**

1. Procédé de soudage par compression isostatique à haute température pour assembler deux pièces (2, 3) d'une matière à l'état solide, pour former un élément de machine composite (1), ces pièces étant formées de façon qu'en les assemblant, les surfaces à joindre viennent complètement ou partiellement en contact mutuel, caractérisé en ce que, après avoir assemblé les pièces (2, 3), on applique sur le joint (4) une première couche (5) d'une poudre ayant pratiquement la même composition que la matière de l'une des pièces, ou mélange de poudres dans lequel chacune des différentes poudres a pratiquement la même composition que la matière de l'une des pièces (2, 3) à assembler, en ce qu'on applique sur la première couche de poudre (5) une seconde couche (8, 10) d'une poudre de verre, en ce qu'on chauffe ensuite la structure composite d'une manière classique jusqu'à une température telle que la poudre de verre se transforme en une couche imperméable au gaz, et en ce qu'on soumet ensuite les pièces (2, 3) à une pression de gaz appliquée de tous les côtés, à une température suffisamment élevée pour produire un soudage par diffusion au niveau des surfaces de contact entre les pièces (2, 3).

2. Procédé selon la revendication 1, caractérisé en ce qu'on assemble des pièces métalliques à l'état solide (2, 3).

3. Procédé selon la revendication 1 ou 2, caractérisé en ce qu'on applique sur la première couche de poudre (5) deux couches de poudre de verre (10, 11), et le verre contenu dans la couche de poudre de verre extérieure (11) a un point de fusion inférieur à celui du verre contenu dans la couche de poudre de verre sous-jacente (10).

4. Procédé selon la revendication 1 ou 2, caractérisé en ce qu'on applique entre la première couche de poudre (5) et la seconde couche de poudre (10) une troisième couche de poudre (6) constituée par une matière, comme par exemple l'olivine, qui a un point de fusion supérieur à la température de compression.

5. Procédé selon l'une quelconque des revendications précédentes, caractérisé en ce qu'on applique les couches de poudre (5, 6, 10, 11) sous la forme d'une suspension ou d'une pâte comprenant un solvant ou un agent ramollissant qui peut être chassé.

6. Procédé selon l'une quelconque des revendications 1, 2 ou 4, caractérisé en ce qu'on place dans un creuset (7) les pièces (2, 3) avec la couche de poudre métallique appliquée (5) et éventuellement la seconde couche de poudre appliquée (6) sur le joint (4), et en ce qu'on emplit le creuset avec la poudre de verre (8), formant respectivement la seconde ou la troisième couche, de façon à recouvrir le joint et les couches sous-jacentes.

FIG. 1

FIG. 2